(19) **Europäisches Patentamt**

**European Patent Office**

**Office européen des brevets**

(11) Veröffentlichungsnummer: **0 291 675 B1**

(12) **EUROPÄISCHE PATENTSCHRIFT**

(45) Veröffentlichungstag der Patentschrift: **20.05.92**

(21) Anmeldenummer: **88105340.9**

(22) Anmeldetag: **02.04.88**

(51) Int. Cl.⁵: **B07B 1/46**, B01D 35/28

(54) Verfahren zur Herstellung einer Siebmatte als Belag für Systemsiebfelder und Siebbelag für Systemsiebfelder.

(30) Priorität: **16.05.87 DE 3716472**

(43) Veröffentlichungstag der Anmeldung:
**23.11.88 Patentblatt 88/47**

(45) Bekanntmachung des Hinweises auf die
Patenterteilung:
**20.05.92 Patentblatt 92/21**

(84) Benannte Vertragsstaaten:
**DE GB IT**

(56) Entgegenhaltungen:
**EP-A- 0 032 436**
**EP-A- 0 087 763**
**DE-A- 2 419 770**
**DE-C- 3 542 635**
**DE-U- 8 235 215**

(73) Patentinhaber: **STEINHAUS GMBH**
**Platanenallee 46**
**W-4330 Mülheim(DE)**

(72) Erfinder: **Wolff, Kurt, Dipl.-Ing.**
**Flurstrasse 42**
**W-4220 Dinslaken(DE)**

(74) Vertreter: **Patentanwälte Dipl.-Ing. Bodo Thiel-**
**king Dipl.-Ing. Otto Elbertzhagen**
**Gadderbaumer Strasse 20**
**W-4800 Bielefeld 1(DE)**

## Beschreibung

Die Erfindung bezieht sich auf ein Verfahren zur Herstellung einer Siebmatte als Belag für Systemsiebfelder der im Gattungsbegriff des Patentanspruchs 1 näher bezeichneten Art und auf einen Siebbelag für Systemsiebfelder der im Gattungsbegriff des Patentanspruchs 6 aufgeführten Art.

Aus der Druckschrift DE-U1 82 35 215 ist ein Siebbelag bekannt, bei dem an der Unterseite der Siebmatte parallel entlang der Außenränder Rastrippen angeordnet sind, die entweder an die Siebmatte angesetzt oder mit dieser einstückig ausgebildet sind. Es ist jedoch ein umständlicher und damit aufwendiger Arbeitsvorgang, die Rastrippen umlaufend unterseitig an den Rand der Siebmatte anzusetzen, während andererseits die Herstellung einer derartigen Siebmatte mit einstückig daran angeformten Rastrippen, die daran umlaufend angeordnet sind, dadurch teuer wird, daß bei der üblichen Herstellung im Gießverfahren für jede Größe jeweils eine separate, offene Gießform vorgesehen werden muß und die Offengießverfahren in Zentrifugen oder auf Gießtischen sehr aufwendig sind. Derartige Siebmatten werden aus duroplastischen Kunststoffen, wie Polyurethan, mit Sieblöchern oder ohne Sieblöcher hergestellt. Bei der Fertigung ohne Sieblöcher erfolgt ein nachträgliches Einbringen der Sieblöcher durch Stanzen. Die ausgestanzten Teile, die sogenannten Lochbutzen, sind nicht mehr verwertbar und somit Abfall.

Der Erfindung liegt daher die Aufgabe zugrunde, den Aufwand für einen solchen Siebbelag zu vereinfachen, indem zur Fertigung der Siebmatte ein geeignetes Bahnmaterial hergestellt und abgelängt wird, an des sen abgelängten Abschnitten dann nur noch minimale Bearbeitungen vorgenommen werden müssen, um die fertigen Siebmatten zu erhalten.

Diese Aufgabe wird bei einem Siebbelag der eingangs genannten Art nach der Erfindung durch die kennzeichnenden Merkmale der Patentansprüche 1 und 6 gelöst.

Der besondere Vorteil der Erfindung liegt darin, daß man die Siebmatte aus einem einfach herzustellenden Bahnmaterial des gummielastischen Werkstoffs fertigen kann, wobei man das Bahmaterial zunächst so vorzugsweise aus einem dafür geeigneten Kunststoff extrudiert, daß an beiden Längsrändern bereits die als Rastelemente dienenden Längsrippen der späteren Siebmatte einstückig angeformt sind. Zum Extrudieren eignen sich nur thermoplastische Kunststoffe, welche den weiteren Vorzug bieten, daß sie unter erneuter Anwendung von Druck und Wärme nach gegebenenfalls vorheriger Zerkleinerung der betreffenden Teile mehrmals umformbar sind. So sind überzählige oder ausgesonderte Teile aus thermoplastischen Kunststoffen kein Abfall, vielmehr kann ihr Material zur Herstellung neuer Teile wiederverwendet werden.

Zwar können grundsätzlich bei einer erfindungsgemässen Siebmatte die Lochzonen schon unmittelbar beim Extrudiervorgang oder gleich anschließend in das Kunststoffmaterial eingeformt werden, besonders vorteilhaft ist es jedoch, wenn erst das fertige Bahnmaterial oder in die davon abzulängenden Bahnabschnitte entsprechend der Länge einer Siebmatte die Lochzonen eingestanzt werden. Dann nämlich können die ausgestanzten Teile , die sogenannten Lochbutzen, gegebenenfalls nach Zerkleinerung wieder dem Ausgangsmaterial zugegeben werden, aus dem das Bahnmaterial gefertigt wird. Das ist nur möglich, weil für die Herstellung der Siebmatte ein thermoplastisches Kunststoffmaterial verwendet wird.

Wichtig ist, daß für die randlich durchgehende Befestigung der Siebmatte auf den Rahmenstegen an den Querseiten der auf Siebmattenlänge abgelängten Bahnabschnitte nachträglich Rastmittel aufgebracht werden, indem zwischen den Längsrändern bzw. in geringen Abstand von deren Längsrippen des jeweiligen Bahnabschnittes zweckmäßig nach unten vorstehende Streifen angeklebt oder angeschweißt werden, die wiederum nach unten vorstehende Rastrippen haben. Man kann also aus dem praktisch endlos herstellbaren Bahnmaterial, das in großen Längen aufgerollt bevorratet werden kann, Siebmatten vorgegebener Breite aber mit variabler Länge besonders kostengünstig herstellen. Dabei spielt es keine Rolle, ob die Lochzonen jeweils bis zum Rand der Siebmatte an den Querseiten durchgehen, weil an den Querseiten ohnehin eine Verstärkung durch die separat angesetzten Raststreifen erfolgt. Man kann andererseits auch bei dem Bahnmaterial schon zwischen voneinander abgeteilten Lochzonen Querstege vorsehen, entlang deren Längsmitte dann das Bahnmaterial beim Ablängen der Bahnabschnitte durchtrennt wird. Man erhält dann Querränder an den abgelängten Bahnabschnitten aus Vollmaterial, an die unterseitig die Raststreifen angeklebt oder angeschweißt werden können. Das setzt allerdings voraus, daß bei der Ablängung der einzelnen Bahnabschnitte stets ein bestimmtes Rastermaß eingehalten wird, das durch den Abstand der Querstege zwischen den Lochzonen des Bahnmaterials vorgegeben ist.

Die gegebenenfalls unterseitig an den Querrändern der fertigen Siebmatte vorstehenden Streifen mit den dortigen Rastrippen erfordern es, an den an sich ebenengleichen Oberseiten der Rahmenstege Vertiefungen vorzusehen, welche die Negativkontur der an der Unterseite der Siebmatte nach unten vorstehenden Streifen haben. Zur Aufnahme der Rastrippen, die an den unterseitig der Siebmatte vorstehenden Streifen angeordnet sind, befinden sich am Grund dieser Vertiefungen entsprechende nutenförmige Ausnehmungen.

Die erwähnten Vorteile ergeben sich auch bei Siebbelägen mit Siebmatten, die parallel zu Randstegen einen oder mehrere Mittenstege haben. Auch diese Mittenstege finden sich dann schon bei dem Ausgangsbahnmaterial, wobei auch hier eine Formschlußverbindung über eine oder mehrere unterseitig an die Mittenstege angeformte Rastrippen mit entsprechenden-Mittenstegen der Bahnelemente möglich ist. Da sich der erfindungsgemäße Siebbelag auch zur Ausrüstung von Flattersieben eignet, kann die zusätzliche Formschlußverbindung zwischen den Mittenstegen der Siebmatte und den Mittenstegen der Rahmenelemente entfallen.

Für den Einsatz bei besonders kritischem Siebgut, das dazu neigt, die Siebmatte im Bereich ihrer Auflagerstellen zu unterwandern, ist es von Vorteil für die Formschlußverbindung zwischen der Siebmatte und den Rahmenstegen zumindest jeweils zwei parallele Rastrippen und -nuten vorzusehen, die möglichst nahe an den beiden einander gegenüberliegenden Längsrändern der Rahmenstege angeordnet sind.

Über die Anordnung der Rastrippen an der Siebmatte einerseits und die entsprechend gewählten Abstände der zugehörigen Rastnuten an den Oberseiten der Rahmenelemente andererseits kann man der aufgesetzten Siebmatte auch eine trommelfellartige Spannung geben, wenn nämlich insbesondere die Querabstände der längs verlaufenden Rastrippen an der Unterseite der Siebmatte kleiner als die Querabstände der entsprechenden Rastnuten an den Oberseiten der Rahmenelemente sind.

Weitere vorteilhafte Ausgestaltungsmerkmale der Erfindung ergeben sich aus den Unteransprüchen.

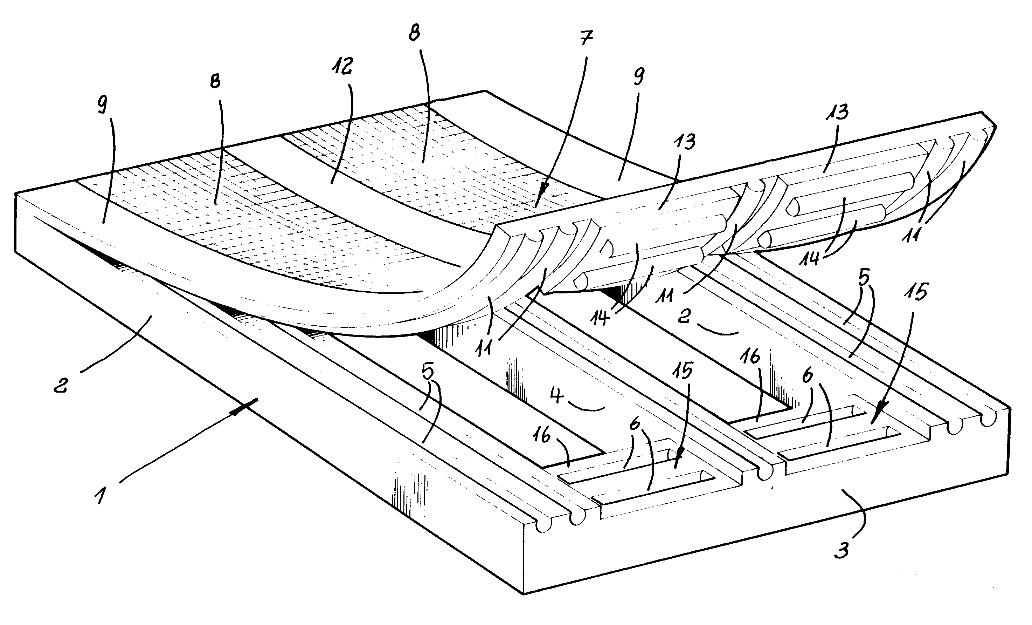

Die Erfindung wird nachfolgend anhand der Zeichnung an einem Ausführungsbeispiel noch näher erläutert.

Die Zeichnung zeigt in perspektivischer Darstellung schräg von oben ein Siebbelagelement für ein Systemsiebfeld.

Im einzelnen zeigt die Zeichnung ein Rahmenelement 1, das über nicht dargestellte Befestigungsmittel mit einer Unterkonstruktion eines Systemsiebfeldes fest verbunden werden kann. Insbesondere können dazu Rast- oder Spreizanker dienen, die mit unterseitigem Überstand an das Rahmenelement 1 angeformt sein kön nen, sofern dies aus einem ausreichend elastischen Werkstoff, wie einem Kunststoff, besteht.

Eine Vielzahl solcher Rahmenelemente 1, die eine quadratische und/oder rechteckige Grundform haben, werden für die Belegung eines Systemsiebfeldes benötigt, wobei die Rahmenelemente 1 dicht aneinander schließend angeordnet werden. Sie stellen lediglich ein jeweils das siebaktive Element tragendes Zwischenelement dar, welches mit der Unterkonstruktion fest verbunden bleiben kann, sofern die aktiven Siebelemente ausgetauscht werden sollen.

Jedes Rahmenelement 1 setzt sich aus Längsstegen 2 und aus Querstegen 3 zusammen, die mit ihren Oberseiten ein Auflager bilden. Zusätzlich können sich zwischen den Querstegen 3 Mittenstege 4 parallel zu den Längsstegen 2 erstrecken. In die als Auflager dienenden Oberseiten der Längsstege 2 und gegebenenfalls der Mittenstege 4 sind Rastnuten 5 eingeformt, die zueinander parallel in Längsrichtung des Rahmenelementes 1 verlaufen. Sie erstrecken sich jeweils bis zu den querseitigen Enden des Rahmenelementes 1. Die Querstege 3 besitzen an ihren Auflager-Oberseiten in Querrichtung verlaufende, zueinander parallele Rastnuten 6, wobei hier die Auflager- Oberseiten durch jeweils den Grund 16 von Vertiefungen 15 gebildet werden. Die Rastnuten 6 können aus formtechnischen Gründen bis zu den Längsseiten des Rahmenelementes 1 durchgezogen sein, wobei sich dann Kreuzungen mit den Rastnuten 5 der Längsstege 2 und gegebenenfalls der Mittenstege 4 ergeben.

Oberseitig wird auf das Rahmenelement 1 eine Siebmatte 7 aus einem thermoplastischen Kunststoff aufgeknöpft, die im Bereich zwischen den Längsstegen 2 des Rahmenelementes 1 Lochzonen 8 hat. Zumindest entlang der Unterseiten ihrer Ränder 9 ist die Siebmatte 7 durch Formschluß über die Rastnuten 5 mit den Längsstegen 2 des Rahmenelementes 1 verbunden, wozu entsprechende Längsrippen 11 an der Unterseite im Randbereich der Siebmatte 7 dienen. Über den Ansatzbereich der Längsrippen 11 hinweg hat die Siebmatte 7 unterseitig eine ebene Auflagerfläche, wobei die über die Unterseite vorstehenden Längsrippen 11 einstückig an die Siebmatte 7 angeformt sind. In gleicher Weise kann die Siebmatte 7 auch entlang ihrer Längsmitte einen Steg 12 mit einer oder mehre rer unterseitig daran angesetzten Längsrippen 11 haben.

An der Unterseite der Siebmatte 7 zwischen dem Mittensteg 12 und die Längsränder 9 sind Streifen 13 von etwa gleicher Breite wie die Querstege 3 des Rahmenelementes 1 angesetzt, die nach unten über die Siebmatte 7 überstehen. Die Streifen 13 können an die Unterseite der Siebmatte 7 angeklebt oder angeschweißt werden, womit sie über die Auflagerebene der Siebmatte 7 nach unten vorstehen. Die vorerwähnten Vertiefungen 15 an der Oberseite des Rahmenelementes 1 im Bereich der Querstege 3 stellen das Negativprofil der Streifen 13 dar, so daß beim Aufrasten der Siebmatte 7 auf das Rahmenelement 1 die Streifen 13 formschlüssig in diese Vertiefungen 15 eintauchen können.

Zur Verrastung der Streifen 13 mit den Rastnuten 6 im Bereich der Vertiefungen 15 der Querstege 3 des Rahmenelementes 1 dienen quer verlaufende Rastrippen 14, die einstückig an die Streifen 13 angeformt sind und über deren Unterseite nach unten hervorragen. Wegen der nachträglichen Anfügung der Streifen 13 an die Siebmatte 7 können die Rastrippen 14 nicht über die gesamte Breite der Siebmatte 7 in Querrichtung verlaufen.

Die Streifen 13 können selbst dann ausreichend fest mit der Siebmatte 7 verbunden werden, wenn - wie in der Zeichnung dargestellt - die Lochzonen 8 bis zu den Querseiten durchlaufen. Durch die Streifen 13 werden im querseitigen Randbereich die Lochzonen 8 nach unten hin abgedeckt, so daß das Siebgut die darunter liegenden Querstege 3 des Rahmenelementes 1 nicht beaufschlagen kann.

Über die Rastrippen 11 unterseitig entlang der Längsränder 9 und die Rastrippen 14 an den aufgesetzten Streifen 13 ist die Siebmatte 7 lösbar mit dem Rahmenelement 1 verbunden. Sie kann daher als unabhängiges Austauschteil ausgewechselt werden, ohne daß das Rahmenelement 1 von der Unterstützungskonstruktion des Systemsiebfeldes abgenommen werden muß. Damit stellt die Siebmatte 7 ein für sich auswechselbares, aktives Siebelement dar.

Bei der Herstellung wird von einem vorgefertigten Bahnmaterial die Siebmatte 7 abgelängt, wobei entlang deren Längsränder 9 bereits die Raststege 11 an das Bahnmaterial angeformt sind. Die Lochzonen 8 können sogleich bei der Fertigung des Bahmaterials eingebracht oder nachträglich darin eingestanzt werden. Nach dem Zuschneiden des Bahmaterials auf die benötigte Länge der jeweiligen Siebmatte 7 werden die Streifen 13 mit den in Querrichtung verlaufenden Rastrippen 14 an der Unterseite der Siebmatte 7 angeklebt oder angeschweißt. Auch die Streifen 13 können von einem vorgefertigten Bahnmaterial abgelängt werden.

**Patentansprüche**

1.  Verfahren zur Herstellung von quadratischen oder rechteckigen Siebmatten aus einem gummielastischen Material mit Lochzonen für Siebbeläge von Systemsiebfeldern, wobei die Siebmatten an der Unterseite ihrer Ränder verrastbare, durchlaufende Rippen haben, dadurch gekennzeichnet, daß das gummielastische Material ein thermoplastischer Kunststoff ist und daraus ein Bahnmaterial gefertigt wird, an dessen beiden Längsrändern die Rippen unterseitig vorstehend einstückig angeformt sind, ein der Länge der Siebmatte entsprechender Abschnitt von dem Bahnmaterial abgelängt wird und unterseitig im Bereich zwischen den Längsrändern des Bahnabschnittes Streifen angeklebt oder angeschweißt werden, die unterseitig vorstehende Rastrippen haben.

2.  Verfahren nach Anspruch 1, dadurch gekennzeichnet, daß die im Bereich zwischen den Längsrändern des Bahnabschnittes anzubringenden Streifen unmittelbar auf die Unterseite des Bahnabschnittes mit Überstand nach unten angeklebt oder angeschweißt werden.

3.  Verfahren nach Anspruch 1, dadurch gekennzeichnet, daß das Bahnmaterial zunächst ohne die Lochzonen hergestellt wird und danach die Lochzonen in das Bahnmaterial eingestanzt werden.

4.  Verfahren nach Anspruch 1, dadurch gekennzeichnet, daß die Lochzonen in die abgelängten Bahnabschnitte eingestanzt werden.

5.  Verfahren nach Anspruch 1, dadurch gekennzeichnet, daß das Bahnmaterial aus Kunststoff extrudiert wird und die Lochzonen beim Extrudieren in den Kunststoff eingeformt werden.

6.  Siebbelag für Systemsiebfelder mit auf einer Unterkonstruktion befestigbaren, quadratischen oder rechteckigen Rahmenelementen, auf denen jeweils eine entsprechend quadratische oder rechteckige, aus einem gummielastischen Material bestehende Siebmatte mit Lochzonen lösbar randlich aufgelegt ist, dadurch gekennzeichnet, daß die Siebmatte (7) an der Unterseite ihrer Ränder (9, 10) verrastbare, durchlaufende Rippen hat, die in entsprechende Ausnehmungen an den Oberseiten der Stege der Rahmenelemente (1) einrastbar sind, daß an der Unterseite der beiden längsseitigen Ränder (9) der Siebmatte (7) je zumindest eine bis zu den Enden durchlaufende Längsrippe (11) angeformt ist und an den beiden Querseiten der Siebmatte (7) unterseitig zwischen den beiden Längsrändern (10) nach unten vorstehende Streifen (13) angesetzt sind, die nach unten vorstehende Rastrippen (14) quer zu Längsrippen (11) haben.

7.  Siebbelag nach Anspruch 6, dadurch gekennzeichnet, daß die Streifen (13) an den Querseiten der Siebmatte (7) über deren Unterseite vorstehen und die querseitigen Rahmenstege (3) Vertiefungen (15) als Negativkontur der vorstehenden Streifen (13) aufweisen, an deren Grund (16) die Ausnehmungen (6) für die Aufnahme der Rastrippen (14) an den Streifen (13) angeordnet sind.

8. Siebbelag nach Anspruch 6 oder 7,
dadurch gekennzeichnet,
daß die Siebmatte (7) in Längsrichtung bis zu ihren Enden durchlaufende Lochzonen (8) hat und die Streifen (13) unter Abdeckung der Endbereiche der Lochzonen (8) an die Siebmatte (7) angesetzt sind.

9. Siebbelag nach einem der Ansprüche 6 - 8,
dadurch gekennzeichnet,
daß die Streifen (13) mit der Siebmatte (7) verklebt oder verschweißt sind.

10. Siebbelag nach einem der Ansprüche 6 - 9,
dadurch gekennzeichnet,
daß an der Unterseite der Längsränder (10) der Siebmatte (7) jeweils wenigstens zwei zueinander parallele Längsrippen (11) sowie an den Rast streifen (13) zwei zueinander parallele Rastrippen (14) und entsprechend an den obenliegenden Seiten der Rahmenstege (2, 3) zumindest zwei Rastnuten (5, 6) derart angeordnet sind, daß die Rastverbindungen nahe den jeweils beiden Rändern der Rahmenstege (2, 3) liegen.

11. Siebbelag nach einem der Ansprüche 6 - 10,
dadurch gekennzeichnet,
daß die Siebmatte (7) und die Rahmenelemente (1) Mittenstege (4, 12) haben, wobei die längsverlaufenden Mittenstege (12) der Siebmatte (7) ebenfalls durch nach unten vorstehende Längsstege gebildet sind.

12. Siebbelag nach Anspruch 11,
dadurch gekennzeichnet,
daß die mittigen Längsstege (12) der Siebmatte (7) ebenfalls an ihren Unterseiten eine oder mehrere Längsrippen (11) haben und entsprechend an den Oberseiten der Mittenstege (4) der Rahmenelemente (1) Rastnuten (5) angeordnet sind.

13. Siebbelag nach einem der Ansprüche 6 - 12,
dadurch gekennzeichnet,
daß die Siebmatte (7) aus einem thermoplastischen Kunststoffmaterial besteht.

## Claims

1. Method of manufacturing square or rectangular screen mats of a rubber-elastic material with performated zones, for screen in-lays of systematic-screen fields, whereby the screen mats have boshable, continuous ribs on the undersides of their edges,
characterized in that
the rubber-elastic material is a thermoplastic synthetic material; that a flat material is made therefrom, at the two longitudinal edges of which the ribs are attached integrally so as to protude from the underside; that a section corresponding in length to the screen mat is cut off from the flat material; and that on the underside, in the area between the longitudinal edges of the material section, strips are glued on or welded on, which strips have bosh ribs protruding from their lower sides.

2. Method according to claim 1,
characterized in that
the stips to be attached in the area between the longitudinal edges of the material section are glued or welded directly onto the underside of the material section, overlapping the latter from the bottom.

3. Method according to claim 1,
characterized in that
the flat material is first of all produced without the perforated areas, and that the perforated areas are thereafter punched into the flat material.

4. Method according to claim 1,
characterized in that
the perforated areas are punched into the cut-off flat material sections.

5. Method according to claim 1,
characterized in that
the flat material is extruded of synthetic material, and that the perforated areas are formed into the synthetic material during extrusion.

6. A screen in-lay for systematic-screen fields with square or rectangular frame elements which can be attached to a substructure, on which a correspondingly square or rectangular screen-mat made of a rubber-elastic material, with perforated areas is attached in such a way as to be removable
characterized in that
the screen-mat (7) comprises boshable, continuous ribs (9,10), which can be boshed into corresponding recessions at the upper sides of the flanges of the frame elements (1), that at least one longitudinal rib (11) running through until the ends are formed onto the underside of each of the two longitudinal edges (9) of the screen-mat (7) and that strips (13) protruding downwards are attached at the underside of the two transverse sides of the screen mat (7) between the two longitudinal edges, which have bosh ribs (14) protruding downwards which are perpendicular to the longitudinal ribs (11).

7. A screen in-lay according to claim 6, characterized in that
the strips (13) on the transverse sides of the screen-mat (7) overlap the underside of the latter, and that the transverse frame flanges (3) provide depressions (15) as negativ contours of the protruding strips (13), at the bottoms (16) of which the recessions (6) for the reception of the bosh ribs (14) are attached to the strips (13).

8. A screen in-lay according to claim 6 or 7, characterized in that
the screen-mat (7) has continuous perforated areas (8) up to its ends, and that the strips (13) are attached to the screen-mat (7) by covering the end areas of the perforated areas (8).

9. A screen in-lay according to claims 6 to 8, characterized in that,
the strips (13) are glued or welded together with the screen-mat (7).

10. A screen in-lay according to claims 6 to 9, characterized in that,
at least two mutually parallel longitudinal ribs (11) are installed at the underside of the longitudinal edges (10) of the screen-mat (7), as well as two mutually parallel bosh ribs (14) on the bosh strips (13), and that at least two bosh grooves (5,6) corresponding to the upper sides of the frame flanges (2,3) are installed in such a way that the bosh connections are located close to the two edges of the frame flanges (2,3).

11. A screen in-lay according to claims 6 to 10, characterized in that
the screen-mat (7) and the frame element (1) have medial flanges (4,12), whereby the longitudinally-running medial flange (12) of the screen-mat (7) is likewise formed by longitudinal flanges protuding downwards.

12. A screen in-lay according to claim 11, characterized in that
the median longitudinal flanges (12) of the screen mat (7) likewise have longitudinal ribs (11) at their undersides, and that bosh groves are correspondingly installed at the upper sides of the median flanges (4) of the frame elements (1).

13. A screen in-lay according to claims 6 to 12, characterized in that
the screen mat (7) consists of a thermoplastic synthetic material.

**Revendications**

1. Procédé de fabrication de toiles de criblage carrées ou rectangulaires en matière offrant l'élasticité du caoutchouc et présentant des zones perforées, comme garniture d'élément de criblage modulaire, la face inférieure des bords des toiles de criblage étant équipée de nervures continues enclenchables,
caractérisé par le fait
que la matière offrant l'élasticité du caoutchouc est une matière synthétique thermoplastique à l'aide de laquelle un produit en forme de lé est fabriqué, dont le dessous des deux bords longitudinaux est pourvu de nervures en saillie, formées d'une pièce à partir de lui, une section du lé étant coupé adéquatement à la longueur de la toile de criblage et des bandes, à la face inférieure pourvues de nervures d'enclenchement saillantes, étant collées ou soudées dessous, dans la zone située entre les bords longitudinaux de la section de lé.

2. Procédé selon revendication 1, caractérisé par le fait que
les bandes à adapter dans la zone située entre les bords longitudinaux de la section du lé sont directement collées ou soudées, en saillie vers le bas, sur la face inférieure de la section du lé taillée.

3. Procédé selon revendication 1, caractérisé par le fait
que le lé est fabriqué tout d'abord sans zones perforées, celles-ci étant estampées ensuite dans le lé.

4. Procédé selon revendication 1, caractérisé par le fait
que les zones perforées sont estampées dans les sections de lé taillées.

5. Procédé selon revendication 1,
caractérisé par le fait
que le lé est extrudé en matière plastique et que les trous de la zone perforée ont été formés dans la matière plastique au cours de l'extrusion.

6. Revêtement d'éléments de criblage modulaires avec éléments de cadre carrés ou rectangulaires, fixables sur une substructure et recouverts respectivement d'une toile de criblage correspondante, carrée ou rectangulaire, à base d'une matière présentant l'élasticité du caoutchouc, cette toile étant pourvue de zones perforées, est fixée en bordure de façon amovible, caractérisé par le fait
que la toile de criblage (7) est pourvue, sur la face inférieure de ses bords (9, 10), de nervures continues, enclenchables dans des cavités adéquates qui équipent les faces supérieures des ponts des éléments de cadre (1),
que les deux bords longitudinaux (9) de la toile de criblage (7) sont pourvus chacun d'au moins une nervure longitudnale (11) continue, allant jusqu'aux extrémités et formée d'une pièce à partir de la face inférieure des bords longitudinaux (9), et que les deux côtés transversaux de la toile de criblage (7) sont équipés, dessous, entre les deux bords longitudinaux (10), de bandes (13) qui débordent vers le bas et sont pourvues de nervures d'enclenchement (14) en saillie vers le bas et disposées transversalement par rapport aux nervures longitudinales (11).

7. Revêtement de crible selon revendication 6,
caractérisé par le fait
que les bandes (13) équipant les côtés transversaux de la toile de criblage (7) sont en saillie sur la face inférieure de celle-ci et que les traverses du cadre (3) présentent des renfoncements (15) en contour négatif des bandes saillantes (13), au fond (16) desquels des cavités (6) sont disposées pour accueillir les nervures d'enclenchement (14).

8. Revêtement de crible selon revendication 6 ou 7,
caractérisé par le fait
que la toile de criblage (7) est pourvue, dans le sens longitudinal, de zones perforées (8) continues, s'étendant jusqu'à ses extrémités, et que des bandes (13) sont fixées à la toile de criblage (7), les extrémités des zones perforées (8) étant recouvertes.

9. Revêtement de crible selon l'une des revendications 6 à 8,
caractérisé par le fait
que les bandes (13) sont collées ou soudées sur la toile de criblage (7).

10. Revêtement de crible selon l'une des revendications 6 à 9,
caractérisé par le fait
que la face inférieure de chacun des bords longitudinaux (10) est pourvue d'au moins deux nervures longitudinales (11) parallèles et les bandes d'arrêt (13) de deux nervures d'enclenchement (14) parallèles l'une à l'autre et que deux rainures (5,6) au moins sont disposées adéquatement sur les faces supérieures des barres (2, 3) du cadre, de sorte que les jonctions par enclenchements soient situées à proximité des deux bords respectifs des barres (2, 3) du cadre.

11. Revêtement de crible selon l'une des revendications 6 à 10,
caractérisé par le fait
que la toile de criblage (7) et les éléments de cadre (1) sont pourvus de ponts médians (4, 12), les ponts médians (12) de la toile de criblage (7), s'étendant dans le sens de la longueur, sont également formés par des bandes longitudinales en saillie vers le bas.

12. Revêtement de crible selon revendication 11,
caractérisé par le fait
que les pont longitudinaux centraux (12) de la toile de criblage (7) sont également pourvus, sur leurs faces inférieures d'une ou de plusieurs nervures longitudinales (11) et que des rainures (5) sont disposées adéquatement sur les faces supérieures des ponts médians des éléments de cadre (1).

13. Revêtement de crible selon l'une des revendications 6 à 12,
caractérisé par le fait
que la toile de criblage (7) est faite en matière synthétique thermoplastique.